# EUROPEAN PATENT SPECIFICATION

(11) **EP 3 294 528 B1**
(45) Date of publication and mention of the grant of the patent: **02.10.2019**
(21) Application number: 16723481.4
(22) Date of filing: 13.05.2016
(51) Int. Cl.: B29C 67/00, B33Y 30/00, B33Y 70/00, B29C 64/112, B29C 64/153, B29C 64/20, B29C 64/209, B29C 64/393, B29C 64/273, B29K 105/00, B33Y 10/00, B33Y 50/02

(54) **ADDITIVE MANUFACTURING APPARATUS AND METHOD**
VORRICHTUNG UND VERFAHREN ZUR GENERATIVEN FERTIGUNG
APPAREIL ET PROCÉDÉ DE FABRICATION D'ADDITIF

(30) Priority: 14.05.2015 GB 201508289
(43) Date of publication of application: 21.03.2018
(73) Proprietor: Developa2 Ltd., London SW6 1RP (GB)
(72) Inventor: BONATSOS, George, London, SW6 1RP (GB); CHOI, Peter, London, SW6 1RP (GB)
(74) Representative: Cork, Robert
(86) International application number: PCT/GB2016/051387
(87) International publication number: WO 2016/181163

(56) References cited:
- WO-A1-2014/068579
- US-A1- 2012 247 365

## Description

### Field

The present invention relates to additive manufacturing. More specifically, the present invention relates to an inkjet-type deposition apparatus and method for use in additive manufacturing.

### Background

Additive manufacturing is the process of building up a three dimensional article in layers. Typically, it is difficult to manufacture an article using more than one type of material at a rate which is consistent with high volume manufacture. There are several types of additive manufacturing devices. One such type is an inkjet deposition apparatus. In an inkjet deposition apparatus, a three-dimensional article is built up layer-by-layer by depositing droplets of a colloidal suspension of material and liquid carrier on a substrate from a number of nozzles.

Various methods have been developed for fusing the material deposited by an inkjet-type deposition apparatus. In a thermal fusing method, a blanket layer of material is deposited and then a fusing agent is added at locations where fusing is required. The layer is then heated to cause the fusing agent to bind the loose material. However, thermal fusing techniques are relatively slow and require high temperatures, and consequently the cost of manufacturing complex multi-material parts is high.

In an optical fusing method, a laser or high power Xenon flashlamp is used to irradiate each layer after it has been deposited in order to evaporate the liquid carrier and fuse the particles of the material in all of the deposited droplets together. However, this rapid drying and melting causes rapid boiling of the liquid carrier, and hence splattering of the material. As a consequence, the created article is not of high quality due to inconsistency in the layers, reducing the definition that can be achieved in the finished article. As with thermal fusing techniques, optical fusing methods are also limited to depositing one layer composed of a single material at a time.

WO 2014/068579 A1 discloses a direct inkjet printing system for fabricating a part by an additive manufacturing process, including a drying station operative to perform a drying process on layers of the ink dispensed from the printhead on a per layer basis. US 2012/0247365 A1 discloses a process for printing an image by printing a substrate with an aqueous inkjet ink and drying the printed image with a near-infrared drying system.

Aspects of the present invention aim to address one or more drawbacks inherent in prior art methods and apparatus for additive manufacturing.

### Summary

According to a first aspect of the present invention, there is provided a deposition apparatus according to claim 1.

The drying means may comprise a plurality of individually controllable drying elements, each of the drying elements being aligned with a respective one of the nozzles; and the melting means may comprise a plurality of individually controllable melting elements, each of the melting elements being aligned with a respective one of the nozzles.

The first energy pulse and the second energy pulse may each comprise a plurality of sub-pulses.

The deposition apparatus may further comprise: a plurality of reservoirs, each reservoir storing a different material in colloidal suspension; and a plurality of print heads, each print head comprising a plurality of nozzles in fluid communication with a respective one of the plurality of reservoirs.

The nozzles of each print head maybe arranged in two or more rows, wherein the nozzles in adjacent rows are offset from each other.

The duration of the first and second energy pulses may be less than the time taken for a pressure wave to travel from the centre of the droplet to the edge of the droplet.

The temporal and intensity profile of the second energy pulse may be configured to have a sharp trailing edge so that the material and the underlying substrate are quenched after being melted by the second energy pulse.

The at least one print head, the drying means and the melting means may comprise positioning means configured to spatially align each of the drying means and the melting means with the at least one print head.

The deposition apparatus may further comprise melting control means configured to control the temporal and intensity profile of the second energy pulse based on the thermal properties of the material and the underlying substrate so as to melt the substrate to a predetermined depth while melting the material in said one of the deposited droplets.

The deposition apparatus may further comprise drying control means configured to control the temporal and intensity profile of the first energy pulse such that the first energy pulse heats the liquid within the droplets to a temperature below the boiling point of the liquid. The drying control means may be configured to control the temporal and intensity profile of first energy pulse such that the first energy pulse causes flash evaporation of the liquid to occur.

The drying means may comprise first and second drying units disposed on opposite sides of the at least one print head, and wherein the melting means comprises first and second melting units disposed on opposite sides of the first and second drying units.

According to second aspect of the present invention, there is provided an additive manufacturing method according to claim 11.

The additive manufacturing method may further comprise: controlling the plurality of melting elements to selectively melt a part of the substrate beneath one of the deposited droplets when melting the material in said one of the deposited droplets, to fuse the material in said droplet to the substrate.

The additive manufacturing method may further comprise: depositing a plurality of first droplets including a colloidal suspension of a first material; controlling the drying elements to dry the material deposited in the first droplets; depositing a plurality of second droplets adjacent to the material deposited in the first droplets, the plurality of second droplets including a colloidal suspension of a second material different to the first material; controlling the drying elements to dry the material deposited in the second droplets; and controlling the melting elements to melt the deposited first and second materials together.

The additive manufacturing method may further comprise: depositing a plurality of first droplets; controlling the drying elements to dry the material deposited in the first droplets; depositing a plurality of second droplets on top of the material deposited in the first droplets; controlling the drying elements and melting elements to dry and melt the material deposited in the second droplets, without melting the material deposited in the first droplets; and removing the material deposited in the first droplets to leave a void beneath the material deposited in the second droplets.

According to a third aspect of the present invention, there is provided a computer-readable storage medium arranged to store computer program instructions which, when executed, perform any of the methods disclosed herein.

### Brief Description of the Figures

Embodiments of the present invention will now be described, by way of example only, with reference to the accompanying drawings, in which:
Figure 1 shows a system diagram of a deposition apparatus according to an embodiment of the present invention.
Figure 2 shows a print head assembly according to an embodiment of the present invention.
Figure 3 shows a flowchart of an additive manufacturing process according to an embodiment of the present invention.
Figures 4a to 4d show examples of energy pulse temporal and intensity profiles.
Figure 5 shows a system diagram of a deposition apparatus according to an embodiment of the present invention.
Figure 6 shows an aerial view of the deposition apparatus shown in Figure 5.

In the drawings, like reference numerals refer to like features throughout.

### Detailed Description

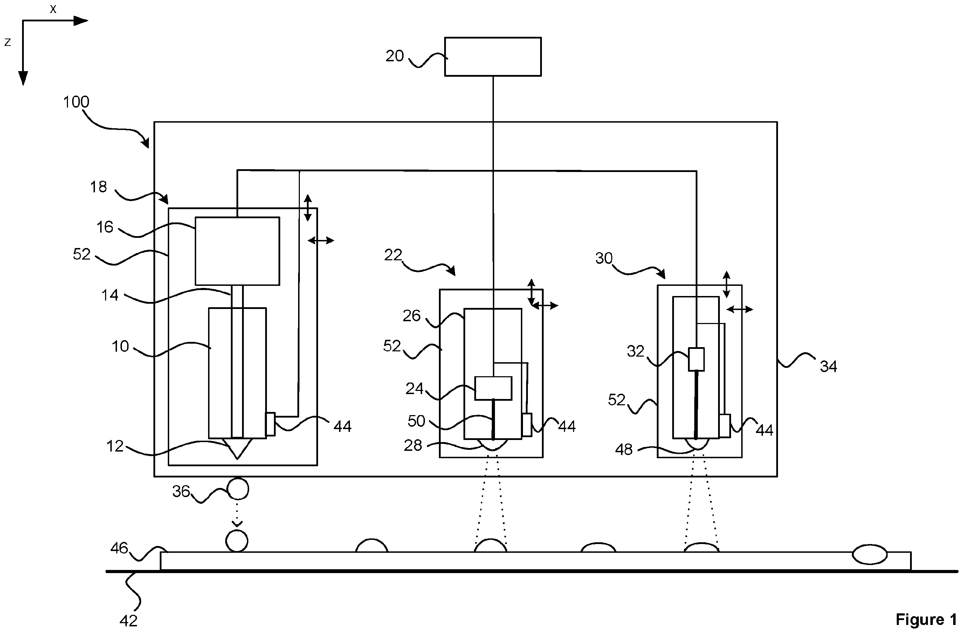

With reference to Figure 1, a deposition apparatus 100 is shown that includes a print head assembly 34 for manufacturing a three-dimensional article using an additive manufacturing process. Design instructions for creating the article may be generated in advance and stored in computer-readable memory.

The print head assembly 34 comprises a deposition unit 18, a drying unit 22, and a melting unit 30 arranged adjacent to each other. In the present embodiment the deposition unit 18, drying unit 22, and melting unit 30 are adjacent in the X direction, which is the direction of relative movement, during deposition, between the print head assembly 34 and a substrate 46 onto which material is to be deposited.

The deposition unit 18 has contained therein a reservoir 16 coupled to a print head 10. The reservoir 16 is coupled to the print head 10 by a suitable conduit 14. The conduit 14 may be flexible to permit relative movement of the reservoir 16 and print head 10, or may be rigid if the reservoir 16 and print head 10 are to remain fixed relative to one another. In the present embodiment, the conduit comprises a flexible tube 14. The flexible tube 14 extends from the reservoir 16 to a nozzle 12 disposed facing the deposition area. The print head 10 may, for example, comprise 128 or more nozzles 12 arranged linearly in the Y direction in Figure 1, where the relative direction of motion between the print head assembly 34 and substrate 46 is in the X direction, and the substrate 46 is spaced apart from the print head assembly 34 in the Z direction. In the present embodiment each nozzle 12 is separated from the nearest neighbouring nozzle 12 by a distance larger than several times the diameter of a droplet. In the present embodiment the nozzle spacing (or pitch) is approximately 300µm, but in other embodiments a different nozzle spacing may be used.

In the embodiment shown in Figure 1, the print head 10 comprises a single row of nozzles extending in the Y direction. However, in other embodiments the print head 10 may comprise one or more additional rows of nozzles 12 spaced apart from the first row of nozzles 12 in the X direction. When a plurality of rows of nozzles 12 are provided, the rows may be staggered so that no two nozzles 12 are directly opposite each other in the X direction.

The reservoir 16 contains a colloidal suspension of a material for manufacturing an article, and a liquid carrier. For example, the liquid carrier may be water or a solvent such as alcohol. The material may be an organic material or an inorganic material. The material may be in the form of a polymer, compound or alloy. The material may include particles of ceramic, metal, plastic, or any suitable construction material capable of being suspended in the liquid carrier and deposited in droplet form through the nozzle 12. The reservoir 16 may be a secondary reservoir connected to a larger primary reservoir disposed outside of the deposition unit 18, to receive the colloidal suspension from the primary reservoir. For example, the reservoir 16 may be connected to a primary reservoir disposed on a translatable support member, such as a rail, that moves in parallel with the deposition unit 18. The support member may be above the print head assembly 34 or to the side of the print head assembly, to enable the reservoir 16 to move synchronously with the print head assembly 34. Alternatively, a primary reservoir may remain stationary while the deposition unit 18 is moving. Furthermore, in some embodiments a secondary reservoir within the print head may be omitted, such that the print head receives the colloidal suspension directly from an external primary reservoir.

The print head 10 comprises a driving mechanism for inducing the colloidal suspension to be ejected from the nozzles 12 as droplets 36. For example, the driving mechanism may be a piezo-electric drive or a thermal drive. Each nozzle 12 ejects a droplet 36 of the colloidal suspension onto the substrate 46. In the present embodiment, each droplet 36 is typically 30 micrometres (µm), but in other embodiments a different droplet size may be used. The driving mechanism may be controlled to set the diameter of each droplet according to the type of material being deposited in the droplet 36.

In further embodiments, the deposition unit 18 includes a plurality of print heads 10. When a plurality of print heads 10 are provided, different ones of the print heads 10 may be coupled to different reservoirs 16, or to the same reservoir. In some embodiments the deposition unit 18 further includes a plurality of reservoirs 16, each coupled to respective ones of the plurality of print heads 10, and each containing a different material suspended in a liquid carrier. As previously explained, in some embodiments, the plurality of reservoirs 16 may be coupled to the print heads 10 without being provided in the deposition unit 18 itself. When a plurality of print heads 10 and reservoirs 16 are installed, the print head assembly 34 is capable of manufacturing an article comprised of a plurality of materials.

Each print head 10 may further include an optical positioning mechanism 44 to detect the position of the print head 10 with respect to the print head assembly 34, enabling the print heads to be spatially aligned with respect to one another. Positioning mechanisms for aligning print heads are well-known in the art of inkjet-type devices, and a detailed description will not be repeated here. However, in brief, the optical positioning mechanisms 44 may be arranged to transmit a light beam, such as a laser beam, and detect the light beam's reflection to determine the position of the print head 10. It will be understood that this is merely an example of one such positioning mechanism, and other suitable positioning mechanisms may be used in embodiments of the invention. A kinematic stage 52, on which the deposition unit 18 is mounted, can be controlled in order to align the print heads 10 by translating each print head 10 in the X and/or Y direction.

In the present embodiment, each drying unit 22 and melting unit 30 further comprises an optical positioning mechanism 44, and is separately and independently aligned with droplets deposited from one of the print heads 10. The drying units 22 and melting units 30 are also mounted on kinematic stages 52, by which accurate positioning can be carried out. In other words, the drying unit 22 and the melting unit 30 are calibrated to be aligned with the print heads 10, using the optical positioning mechanisms 44 and kinematic stages 52. The kinematic stages 52 are preferably 5-axis positioning mechanisms configured to control positioning in the X direction, Y direction, Z direction, as well as pitch and yaw (rotation around X and Y axes).

The substrate 46 onto which droplets are deposited maybe a previous layer of the article being manufactured. In other words, where the article comprises n layers of deposited material, the substrate 46 is layer n-i. Alternatively, the substrate 46 may be a base layer not forming part of the completed article. The substrate 46 to be printed is mounted on a high stability base plate 42. In one embodiment, the base plate 42 is provided with a precision vertical movement mechanism, to allow it to traverse along the Z direction. The limit of travel of the base plate along the Z direction controls the height of the article that can be manufactured. The remaining dimensional limits are defined by a surface bounded by the extent of the nozzles 12 in the Y direction, and the limit of travel of the print head assembly 34 in the X direction.

In a further embodiment, the base plate 42 is additionally provided with a precision movement mechanism along the Y direction. In this embodiment, the printable area is limited only by the limit of travel of the base plate 42 along the Y direction.

Furthermore, in some embodiments the base plate 42 can be connected to a micro-movement mechanism configured to move the base plate 42 by a distance in the Y direction that is less than the separation between the nozzles 12. This enables a higher resolution to be achieved, by enabling a droplet to be deposited at a location between two droplets previously deposited by adjacent nozzles. For example, the base plate 42 may be moved by a distance equal to half the nozzle spacing to achieve a 2x resolution increase.

The print head assembly 34 is configured to move at a near constant velocity across the printable area in the X direction. Typically, the print head assembly 34 moves with a velocity of 1 metre per second (m/s), although other velocities are also possible.

The drying unit 22 comprises a plurality of drying elements. Each drying element comprises an energy emitting part 28, such as a focussing lens, configured to emit energy generated by an energy source 24. The energy source 24 may be configured to emit energy in various forms. For example, the energy source may an ion beam source, electron beam source, or a source of electromagnetic radiation. The energy source 24 is used to dry the material in a deposited droplet 36 by evaporating the liquid carrier. For example, the energy sources 24 may be photon energy sources 24 that are configured to generate and emit pulses of incoherent or coherent electromagnetic radiation. In the present embodiment the photon energy sources 24 are high power infrared light emitting diodes (LEDs), and the energy emitting part 28 is a focussing lens configured to focus a pulse of electromagnetic radiation onto a deposited droplet. However, in other embodiments other types of energy source may be used as described above. In the present embodiment, the energy sources 24 are coupled to respective focusing lenses 28 by an optical guide 50 such as a fibre optics cable or a light pipe.

In some embodiments, the number of drying elements 24 is equal to the number of nozzles 12 on each corresponding print head 10. The focusing lenses 28 are positioned such that each lens 28 will be directly above a droplet 36 deposited from a corresponding one of the nozzles 12 when the drying unit 22 is aligned with the print head 10 and the print assembly 34 moves in the X direction. In the present embodiment, the drying unit 22 is mounted in the print head assembly 34 on a kinematic stage 52 configured to provide at least 5-axis adjustment, to allow the optical axes of drying energy pulses generated by the energy sources 24 to be aligned with the centres of the corresponding deposited droplets 36. This allows each deposited droplet 36 to be individually illuminated by a drying energy pulse generated by a corresponding one of the energy sources 24.

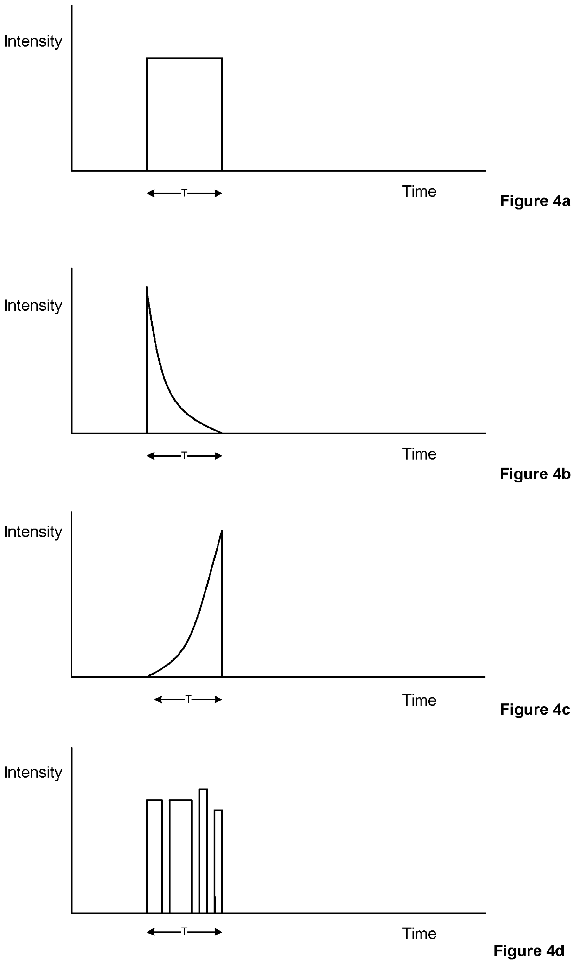

Each of the drying elements is individually controllable to generate an energy pulse for drying, without melting, the material deposited on the substrate. Example temporal and intensity profiles for the drying energy pulses are shown in Figures 4a-d. Here, the term "temporal and intensity profile" refers to a plot of intensity versus time. Figure 4a shows a box function, where the intensity of the drying energy pulse instantaneously peaks, remains at that level for a period of time, T, and instantaneously decreases to o at the end of the period. In other words, the energy source 24 is turned off at the end of the time period T. Figure 4b shows a ramp-down function, where the intensity of the drying energy pulse instantaneously peaks, and then gradually decreases to o over a time period, T. Figure 4c shows a ramp-up function, where intensity of the drying energy pulse slowly increases over a time period, T. At the end of the time period the drying energy pulse is cut off, for example by turning off the energy source. Figure 4d shows a comb function. Here, the drying energy pulse comprises a plurality of sub-pulses, each, for example, taking the form of a box function. The summed period for the sub-pulses is equal to the time period T as previously described.

In further embodiments, the drying unit 22 may comprise a smaller number of drying elements than the number of print head nozzles. For example, the drying unit 22 may only comprise a single drying element, which takes the same form as previously described. In such embodiments, the drying unit 22 can be configured to be moveable in the Y direction in order to selectively illuminate each individual droplet. In other words, the drying unit 22 can be configured to raster across the substrate 46.
The diameter of each droplet immediately after being ejected from a nozzle, before contacting the substrate, is dictated by the nozzle geometry, the ejection process and properties of the droplet. As shown in Figure 1, the droplet spreads after landing on the substrate 46. Typically, the diameter of a droplet as-deposited on the substrate is between 1.25 and 2 times the diameter of the airborne droplet 36. In the present embodiment, each focussing lens 28 is configured such that each drying element illuminates an area that is large compared to the droplet size. This ensures that all liquid in the droplet will be heated and evaporated by the drying energy pulse. For example, the Full Width Half Maximum of the drying energy pulse, taking the form of a Gaussian beam, maybe between 1.25 and 2 times the diameter of the deposited droplet. However, in other embodiments each drying element may illuminate a smaller area, for example when the ambient temperature is sufficiently high to evaporate any residual liquid around the edge of the droplet before the droplet reaches the melting unit 30.

The melting unit 30 comprises a plurality of melting elements. The melting elements comprise a focusing lens 48 and an energy source 32 for melting the material after it has been dried by evaporating the liquid carrier. Optionally, a portion of the substrate 46 beneath the dried material may also be melted so that the material is bonded to the substrate 46. This process may also be referred to as fusing, since the deposited material is fused to the substrate. To fuse the deposited material to the substrate, the substrate may be melted to a relatively shallow depth, for example about 0.1 µm. The energy source 32 may take any of the forms as described above with reference to the drying unit 22. The energy source 32 is configured to generate energy pulses having a higher intensity than the drying energy pulses. Additionally, the energy source 32 may be a high intensity photon energy source 32 configured to generate and emit coherent electromagnetic radiation, and may for example be a high power laser diode. Although coherent electromagnetic radiation is preferable, as previously explained, incoherent electromagnetic radiation may be generated. Alternatively, the melting unit 30 may comprise a single energy source 32 coupled to the plurality of focusing lenses 48 by a multiplexer. In the present embodiment each high intensity photon energy source 32 is coupled to the respective focusing lens 48 through a fibre optic cable. The number of high intensity photon energy sources 32 is equal to the number of nozzles 12 on each corresponding print head 10. The focusing lenses 48 are positioned such that each lens 48 will be directly above a droplet 36 deposited from a correlated nozzle 12 when the melting unit 30 is aligned with the print head 10 and the print assembly 34 moves in the negative X direction.

In the present embodiment, each of the melting elements is individually controllable. The temporal and intensity profiles of the melting energy pulses, or beams, produced by the energy sources 32, are programmable to take any of the forms previously described with reference to Figures 4a-d. Advantageously, as shown in Figure 4c, the temporal and intensity profile of the melting energy pulse is programmable to have a sharp trailing edge. In other words, the melting energy pulse terminates sharply such that the melted material cools rapidly, resulting in quenching of the melted material and, optionally, the melted underlying substrate 46.

In further embodiments, the melting unit 30 may comprise a smaller number of melting elements than the number of nozzles, for example only one melting element, which takes the same form as previously described. In such embodiments, the melting unit 30 is configured to move in the Y direction in order to selectively illuminate each individual droplet. In other words, the melting unit 30 is configured to raster across the substrate 46.

The melting unit 30 is mounted in the print head assembly 34 on a kinematic stage configured to provide at least 5-axis adjustment, to allow the optical axis from each high intensity energy source 32 to be aligned with the centre of the corresponding deposited droplet 36. This allows each deposited droplet 36 to be individually illuminated by a melting energy pulse (which may comprise a plurality of sub-pulses) generated by the high intensity energy sources 32, after the liquid carrier has been evaporated by the drying unit 22.

As shown in Figure 1, the drying unit 22 is spaced apart from the print head 10 in the X direction. The drying unit 22 is disposed so as to trail the print head 12 in the direction of movement of the print head assembly 34 relative to the substrate 46 while material is being deposited. The melting unit 30 is also spaced apart from the drying unit 22 in the X direction, and is disposed to trail the drying unit 22 in the direction of movement of the print head assembly 34 relative to the substrate 46 while material is being deposited. The separation between the drying unit 22 and melting unit 30 may be determined in accordance with the relative velocity of the deposition unit 18 to the substrate 46 during deposition, and/or in accordance with the thermal properties of the material being deposited and the liquid carrier.

The components of the print head assembly 34 are controlled by a controller 20 coupled to a user input device. The controller 20 comprises a memory for storing control instructions. The controller 20 is configured to control the position of the print head assembly 34, print head(s) 10, drying unit 22 and melting unit 30. Additionally, the controller 20 controls the spatial positions and rate at which droplets 36 are ejected from the nozzles 12 and the temporal and intensity profiles of the drying and melting energy pulses generated by the energy sources 24 and 32. Temporal and intensity profiles are a measure of energy intensity as a function of time.

In the present embodiment, the controller 20 is configured to select the temporal and intensity profiles of the drying energy pulses based on the thermal properties of the material being deposited and liquid carrier and the thermal properties of the substrate 46 on which the droplet has been deposited, so that the liquid carrier is heated to a temperature below its boiling point. This causes the evaporation of the liquid carrier without splattering. In some embodiments, the temporal and intensity profiles of the drying energy pulses can be programmed to cause flash evaporation of the liquid carrier. Flash evaporation is a process whereby a liquid is heated to a superheated state.

In addition, in the present embodiment the controller 20 is configured to select the temporal and intensity profiles of the melting energy pulses based on the thermal properties of the material being deposited and the substrate 46, so as to melt the underlying substrate 46 to a predetermined depth through the deposited material. By melting both the substrate and the newly-deposited material, the material in the droplet can be fused to the substrate, improving the structural integrity of the finished article. The melting operation may therefore also be referred to as a fusing operation. The predetermined depth may be of the order of 0.1 micrometres. By controlling the depth to which the substrate is melted during the fusing operation, the physical and mechanical properties in 3-D of the finished article can be controlled with high precision.

Alternatively, as will be explained later, it is not essential to melt the underlying substrate 46. For example, it may be desired to produce a movable or flexible layer that can slide over the substrate 46, in which case the material in the newly-deposited layer can be melted without fusing the material to the underlying substrate 46.

In operation, different print heads 10 are activated when the print head assembly 34 is positioned over a designated area, as determined by the controller 20 according to the required material. A plurality of print heads 10 can eject droplets 36 of colloidal suspension of different materials simultaneously, as the print heads 10 will be over different spatial positions. In subsequent passes of the print head 10, different patterns of droplets can be ejected to create complex three dimensional structures comprising multiple individual material components.

In addition, positional feedback mechanisms can be incorporated on the print head assembly 34 to allow the controller 20 to determine exactly when each print head 10 is over a designated area where the material corresponding to that particular print head 10 is to be deposited. The controller 20 may also use the positional feedback mechanism to determine when the drying unit 22 is over a deposited droplet of a particular material, and control the respective energy sources 24 to deliver the necessary energy to evaporate the liquid carrier. Similarly, the controller 20 may use the positional feedback mechanism to determine when the melting unit 30 is over a deposited droplet of a particular material and control the respective photon sources 32 to deliver at least one pulse of energy with a suitable temporal and intensity profile to melt and fuse the colloidal clusters remaining in the deposited droplet, and a thin surface layer of underlying substrate 46, after the liquid carrier has been evaporated. As described above, if the surface layer of the underlying substrate 46 needs to be melted during the fusing operation in order to fuse the deposited material to the substrate 42, the substrate may be melted to a depth of the order of 0.1 micrometres.

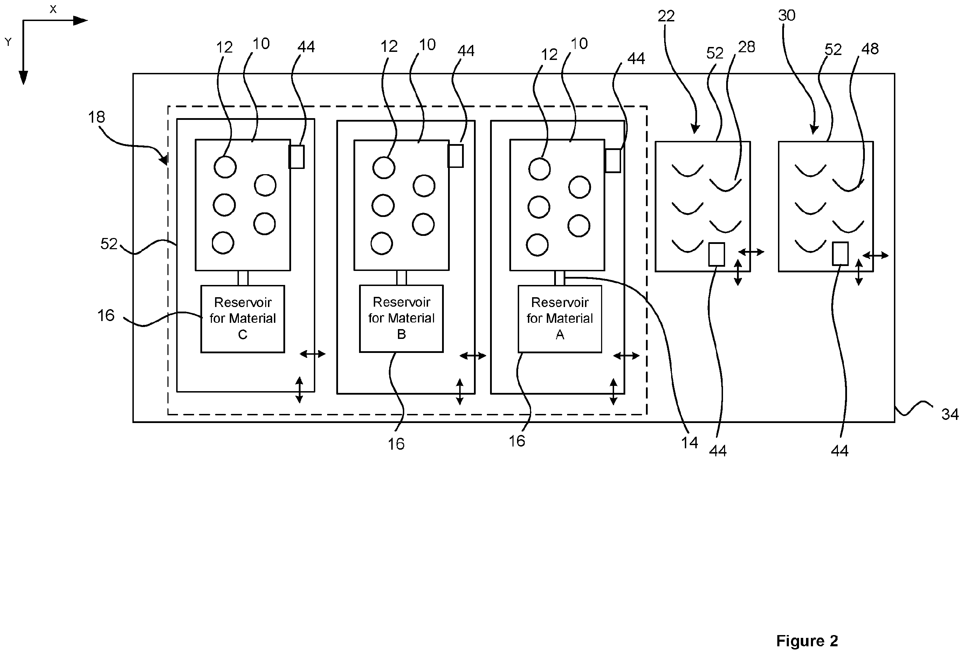

Referring now to Figure 2, a print head assembly 34 is illustrated according to an embodiment of the present invention. In Figure 2, a cross-sectional view of the print head in the X-Y plane is shown. In the present embodiment, the deposition unit 18 comprises a plurality of print heads 10, each coupled to a respective reservoir 16 by a respective conduit 14. Each reservoir 16 may contain a different material in colloidal suspension. The print heads 10 are positioned close to each other and are adjacent in the X direction, which is the direction of relative movement, during deposition, between the print head assembly 34 and a substrate onto which material is to be deposited. A single drying unit 22 and a single melting unit 30, each having the same number of focusing lenses 28, 48 as the number of nozzles in each print head 10, are configured to be adjustable in the Y direction so that they can be aligned with the print heads 10. In alternative embodiments, the number of focussing lenses 28, 48 is less than the number of nozzles 12, and the drying unit 22 and/or melting unit 30 can traverse in the Y direction in order to sequentially illuminate individual droplets in turn.

In embodiments of the present invention, print heads 10 for depositing different materials maybe provided in different spatial arrangements within the print head assembly 34. For example, the print heads 10 may be adjacent in the X direction as shown in Figure 2, or alternatively may be adjacent in the Y direction. However, arranging the print heads 10 in a row in the X direction provides an advantage over arranging the print heads 10 in a row in the Y direction in that it avoids the whole print head assembly 34 from having to translate in the Y direction to deposit different materials on the same area. Therefore, the embodiments described with reference to Figure 2 allow different types of material to be deposited in a single pass of the print head assembly 34 over the substrate 46.

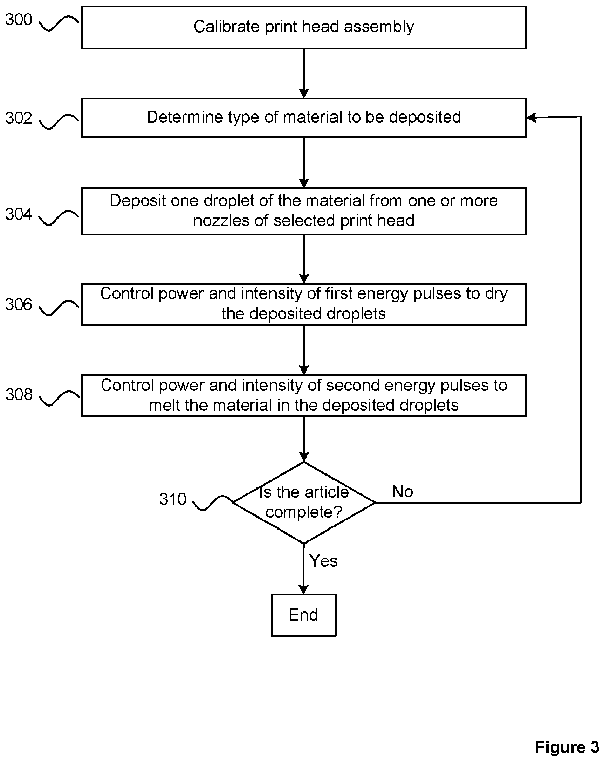

A process of manufacturing an article using the deposition apparatus 100 shown in Figure 1 will now be described with reference to Figure 3.

In a first step 300, a calibration procedure is performed. By way of example only, the calibration can be as follows:
a. Moving the print head assembly 34 to a predetermined area of the deposition apparatus 100 and printing from alternate (in other words, every other) nozzles 12 to generate a single row of droplets.
b. Moving the print head assembly 34 such that the drying unit 22 is over the deposited droplets and activating spatial adjustments to the kinematic stage to precisely align the optical axis of the respective drying energy pulses with the centres of the respective deposited droplets 36.
c. Moving the print head assembly 34 such that the melting unit 30 is over the deposited droplets 36 and activating spatial adjustments to the kinematic stage to precisely align the optical axis of respective melting energy pulses with the centres of the respective deposited droplets 36.
d. Moving the print head assembly 34 to another predetermined area and printing from the other set of alternate nozzles 12 to generate a single row of droplets.
e. Moving the print head assembly 34 such that the drying unit 22 is over the newly deposited droplets, checking if the previous alignment remains within a predetermined limit, and if not, activating spatial adjustments to the kinematic stage to precisely align the optical axis of the respective drying energy pulses with the centres of the respective newly deposited droplets 36.
f. Moving the print head assembly 34 such that the melting unit 30 is over the newly deposited droplets 36, checking if the previous alignment remains within a predetermined limit, and if not, activating spatial adjustments to the kinematic stage to precisely align the optical axis of respective melting energy pulses with the centres of the respective newly deposited droplets 36.
g. Repeating steps (a) to (f) iteratively until alignment converges towards the defined limit of precision.

The calibration step 300 maybe carried out at the start of each print job. Alternatively, the calibration step 300 may be carried out when the deposition apparatus 100 is first powered on, or when requested by the user.

At step 302, the type of material to be deposited in a predetermined location is determined by the controller 20. The material is chosen according to the design instructions stored in the memory of the controller 20. The controller 20 selects a print head 10 according to the required material.

The controller 20 controls the print head assembly 34 to move along the X axis so that the selected print head 10 is over the predetermined location. At step 304, the colloidal fluid from the reservoir 16 connected to the selected print head 10 is ejected from one or more of the nozzles 12 on the selected print head 10 and deposited onto the substrate 46 fixed to the base plate 42 at the predetermined location.

The print head assembly 34 is controlled to continue moving along the X axis until the drying unit 22 is positioned over the previously deposited droplets 36 at the predetermined location. At step 306, the corresponding energy sources 24 in the drying unit 22 are actuated to deliver a specific amount of energy to evaporate the liquid carrier in the deposited droplets 36, leaving behind a cluster of colloidal particles of the material. The specific amount of energy is delivered in a drying energy pulse as previously described, and is based on the determined type of material. As described above, the drying energy pulse may be a single pulse, or may include a plurality of sub-pulses as shown in Fig. 4d.

The print head assembly 34 is controlled to continue to move along the X direction until the melting unit 30 is positioned over the cluster of colloidal materials. At step 308, the corresponding energy sources 32 in the melting unit 30 are actuated to deliver a specific amount of energy to melt the cluster of colloidal particles. When it is desirable to fuse the colloidal particles to the underlying substrate 46 on which the particles are located, the energy sources 32 are configured to melt the cluster of colloidal particles and the underlying substrate. The duration and intensity of the melting energy pulses is controlled according to the determined type of material and the composition of the substrate 46 and the required depth of the underlying substrate 46 to be melted. This melting fusion bonds the colloids into a liquid entity, together with a small fraction of the underlying substrate 46. As described above, the melting energy pulse may be a single pulse, or may include a plurality of sub-pulses as shown in Fig. 4d.

Optionally, the temporal and intensity profile of the melting energy pulse is configured to have a sharp trailing edge so that the deposited material is quenched. The immediate termination of the melting energy pulses results in rapid cooling of the molten materials and substrate 46, and their solidification into nano-crystalline articles.

In some implementations, such as the construction of a temporary support structure, it is not necessary to perform the melting step 308. This allows the deposited material to be easily removed from the substrate when the overlying structure is completed. Examples are the manufacture of a box having a hinged lid, or a structure on which a roof can be deposited before the roof can support itself. In other words, the drying step 306 may be performed and then the print head assembly 34 may move on to the next deposition area in the instruction sequence. In this way, the drying elements can be controlled in order to dry the material deposited in a plurality of first droplets, without melting the material deposited in the first droplets. A plurality of second droplets can then be deposited on top of the non-fused material that was deposited in the first droplets. Then, the drying elements and melting elements can be controlled to dry and melt the material deposited in the second droplets in the normal manner, as described above, creating a stable self-supporting structure from the material in the second droplets. At the end of the deposition process, the powder-like non-fused material from the first droplets can be easily removed, for example using a jet of liquid or gas, so as to leave a void beneath the fused material deposited in the second droplets.

In some implementations, it may be necessary to form two dimensional structures, within the three dimensional article, that allow portions of the three dimensional article to move or be flexible. To achieve this, a plurality of first droplets are deposited and dried, without being melted. A plurality of second droplets are then deposited on top of the material remaining from the deposition of the first droplets, dried, and fused to the dried material from the first droplets. In other words, the material deposited in the first pass of the print head 10 is not fused to the underlying substrate 46, but is fused to later layers, to construct a surface that is able to freely slide over the substrate 46.

Advantageously, the present invention allows for the deposition of alloys in the three dimensional article. Here, a first droplet containing a first type of material in colloidal suspension is deposited from a first print head 10 and dried. Then, a second droplet containing a different type of material in colloidal suspension is deposited from a second print head 10 on top of the material remaining after the first droplets are dried. The second droplets are then dried and the material contained therein fused to the first material and, optionally, the underlying substrate 46. Therefore, it is possible to fuse one type of material to another in a single pass of the print head assembly.

Alternatively, the second droplets maybe deposited adjacent to the dried first droplets by moving the baseplate 42. The second droplets are then dried. The material in the dried first and second droplets is then fused to the substrate 46 by the melting energy pulses. Therefore, it is possible to create a single layer of a three dimensional article within which the distribution of different materials is controlled on a fine length scale, of the order of the droplet diameter.

In step 310, it is determined whether the three dimensional article is complete based on the control instructions. If the article is complete, or, in other words, if the final layer has been deposited, the process ends. If the article is not complete, the baseplate 42 moves in downwards in the Z direction and steps 302 to 310 are repeated to deposit materials over the X-Y plane on the substrate 46 until the article is completed.

At the limit of travel of the print head assembly 34, or after one complete layer of material has been deposited, the print head assembly 34 returns to the predetermined starting position. While the print head assembly 34 returns to the predetermined starting position, the baseplate 42 is lowered along the Z direction by an amount equal to the thickness of the material deposited over the X-Y plane.

In practice, due to the finite separation between the print head(s) 10, drying unit 22, and melting unit 30, more than one row of droplets is deposited along the X-Y plane before the drying unit 22 is positioned over the first row of deposited droplets. This does not affect the process of evaporation of the deposited droplet by the corresponding drying unit 22, followed by the subsequent fusion bonding by the melting unit 30.

For a deposition apparatus 100 used in an industrial application, the print head assembly 34 may move with a velocity of order 1 m/s. Two adjacent deposited droplets 36 may be separated by approximately 100 µm in the X direction. Therefore, the print head assembly 34 will move over the area between the deposited droplets (the working area) in 100 µs. A typical duration of the drying energy pulse can be of the order of 10 µs, and that of the melting energy pulse can be of the order of 1 µs. Therefore, the movement of the print head assembly 34 will not significantly impact on the positioning accuracy of the evaporation and fusion processes, as the time of application of the energy sources 24, 32 are short compared with the time that sources are moving across the working area. In addition, the duration of the drying and melting energy pulses are preferably short compared to the time taken for a pressure wave to travel from the centre of the deposited droplet to the edge of the deposited droplet. This time is related to the speed of sound in the material being deposited, and may be referred to as the 'sound time' of the material.

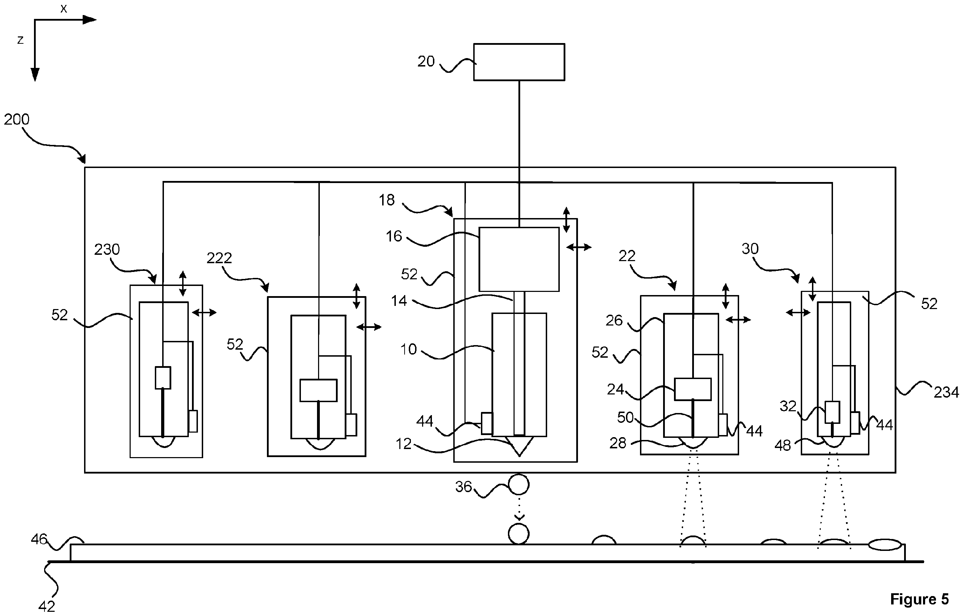

Figure 5 shows a deposition apparatus 200 according to another embodiment of the present invention. In many respects the deposition apparatus 200 is substantially the same as the deposition apparatus 100 described with reference to Figures 1 and 2, and discussion of common features will not be repeated herein. In addition to the features shown in Figure 1, deposition apparatus 200 includes one additional drying unit 222 and one additional melting unit 230. The additional drying unit 222 and additional melting unit 230 are arranged in a manner that mirrors that of the drying unit 22 and melting unit 30, with reference to the deposition unit 18. This embodiment enables bi-directional printing, since material can be deposited, dried and melting while scanning in both positive and negative directions along the X-axis. In contrast, the apparatus of Figures 1 and 2 can only deposit a new layer of material while scanning in a single direction, and upon reaching the limit of travel in that direction the print head assembly must return to the starting point before printing can resume. In comparison, bi-directional printing is therefore more efficient since an article can be constructed more quickly than with mono-directional printing.

Furthermore, when a bidirectional deposition apparatus 200 such as the one shown in Figure 4 is used, the leading drying unit 222 (or 22, depending on the direction of travel) may optionally be used to preheat the substrate 46 before deposition occurs. In other words, the substrate 46 can generally remain at room temperature, but the use of an in-situ drying pulse can locally heat the substrate 46 at the points where deposition will occur. This reduces the time and/or energy intensity required to evaporate the liquid carrier after deposition. In a further embodiment, the additional melting unit 230 may not be present. In such embodiments bi-directional printing will not be possible, however, the leading drying unit can still be used to locally heat the substrate 46 before deposition.

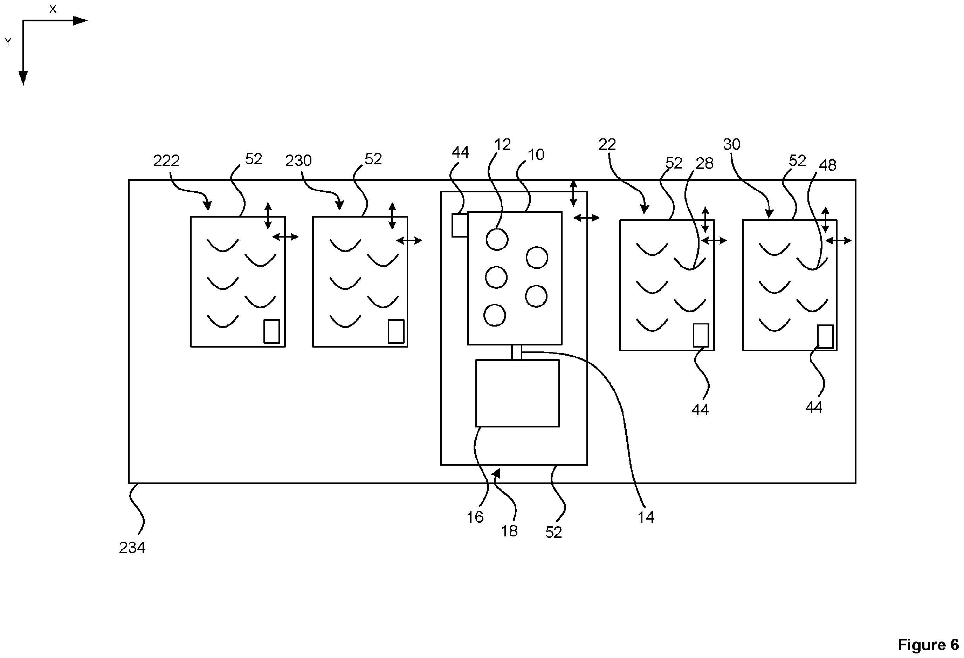

The print head assembly 234 of Figure 5 is shown in more detail in Figure 6. Here, it is again shown that a drying unit 22, 222 is disposed on either side of the deposition unit 18. A melting unit 30, 230 is disposed on the side of each drying unit 22, 230 opposite the side facing the deposition unit 18.

Although a few exemplary embodiments have been shown and described, it will be appreciated by those skilled in the art that changes may be made in these exemplary embodiments without departing from the principles of the invention, the range of which is defined in the appended claims.

## Claims

1. A deposition apparatus (100) for use in additive manufacturing, the deposition apparatus comprising:
at least one reservoir (16) for storing a colloidal suspension of material and a liquid carrier;
at least one print head (10) comprising a plurality of nozzles (12) in fluid communication with the reservoir, each nozzle configured to deposit a droplet (36) of the colloidal suspension onto a substrate (46); and
drying means (22) disposed adjacent the at least one print head,
**characterised in that** the drying means is configured to selectively supply a first energy pulse to a deposited droplet in order to evaporate the liquid from the deposited droplet, the apparatus further comprising:
melting means (30) disposed adjacent the drying means, the melting means configured to selectively supply a second energy pulse for melting the material in a droplet dried by the drying means.

2. The deposition apparatus according to claim 1, wherein the drying means comprises a plurality of individually controllable drying elements, each of the drying elements being aligned with a respective one of the nozzles; and
wherein the melting means comprises a plurality of individually controllable melting elements, each of the melting elements being aligned with a respective one of the nozzles.

3. The deposition apparatus according to claim 1 or claim 2, wherein the drying means is configured to supply the first energy pulse as a plurality of first sub-pulses, and the melting means is configured to supply the second energy pulse as a plurality of second sub-pulses.

4. The deposition apparatus according to any one of the preceding claims, further comprising:
a plurality of reservoirs, each reservoir (16) storing a different material in colloidal suspension; and
a plurality of print heads, each print head comprising a plurality of nozzles in fluid communication with a respective one of the plurality of reservoirs.

5. The deposition apparatus according to any one of the preceding claims, wherein the nozzles of each print head are arranged in two or more rows, wherein the nozzles in adjacent rows are offset from each other.

6. The deposition apparatus according to any one of the preceding claims, wherein the deposition apparatus is configured to control the duration of the first and second energy pulses to be less than the time taken for a pressure wave to travel from the centre of the droplet to the edge of the droplet.

7. The deposition apparatus according to any one of the preceding claims, wherein the deposition apparatus is configured to control the temporal and intensity profile of the second energy pulse to have a sharp trailing edge so that the material and the underlying substrate are quenched after being melted by the second energy pulse.

8. The deposition apparatus according to any one of the preceding claims, wherein the at least one print head, the drying means and the melting means comprise positioning means configured to spatially align each of the drying means and the melting means with the at least one print head.

9. The deposition apparatus according to any one of the preceding claims, further comprising melting control means configured to control the temporal and intensity profile of the second energy pulse based on the thermal properties of the material and the underlying substrate so as to melt the substrate to a predetermined depth while melting the material in said one of the deposited droplets, and/or
wherein the deposition apparatus further comprises drying control means configured to control the temporal and intensity profile of the first energy pulse such that the first energy pulse heats the liquid within the droplets to a temperature below the boiling point of the liquid, and preferably
wherein the drying control means is configured to control the temporal and intensity profile of first energy pulse such that the first energy pulse causes flash evaporation of the liquid to occur.

10. The deposition apparatus according to any one of the preceding claims, wherein the drying means comprises first and second drying units disposed on opposite sides of the at least one print head, and wherein the melting means comprises first and second melting units disposed on opposite sides of the first and second drying units.

11. An additive manufacturing method comprising:
controlling (304) a print head comprising a plurality of nozzles to deposit a plurality of droplets of a colloidal suspension of material and liquid carrier onto a substrate;
**characterised in that the method further comprises:**
controlling (306) a plurality of individually controllable drying elements to selectively supply a first energy pulse to a deposited droplet in order to evaporate the liquid from the deposited droplet; and
controlling (308) a plurality of individually controllable melting elements to selectively supply a second energy pulse for melting the material in a droplet dried by the drying means.

12. The additive manufacturing method of claim 11, further comprising:
controlling the plurality of melting elements to selectively melt a part of the substrate beneath one of the deposited droplets when melting the material in said one of the deposited droplets, to fuse the material in said droplet to the substrate.

13. The method according to claim 11 or 12, comprising:
depositing a plurality of first droplets including a colloidal suspension of a first material;
controlling the drying elements to dry the material deposited in the first droplets;
depositing a plurality of second droplets adjacent to the material deposited in the first droplets, the plurality of second droplets including a colloidal suspension of a second material different to the first material;
controlling the drying elements to dry the material deposited in the second droplets; and
controlling the melting elements to melt the deposited first and second materials together.

14. The method according to claim 11, comprising:
depositing a plurality of first droplets;
controlling the drying elements to dry the material deposited in the first droplets;
depositing a plurality of second droplets on top of the material deposited in the first droplets;
controlling the drying elements and melting elements to dry and melt the material deposited in the second droplets, without melting the material deposited in the first droplets; and
removing the material deposited in the first droplets to leave a void beneath the material deposited in the second droplets.

15. A computer-readable storage medium arranged to store computer program instructions which, when executed, perform the method according to any one claims 11 to 14.

## Patentansprüche

1. Abscheidungsvorrichtung (100) zur Verwendung in der additiven Fertigung, wobei die Abscheidungsvorrichtung aufweist:
mindestens einen Behälter (16) zum Speichern von einer kolloidalen Suspension aus Material und einer Trägerflüssigkeit;
mindestens einen Druckkopf (10), der eine Mehrzahl von Düsen (12) in Fluidverbindung mit dem Behälter aufweist, wobei jede Düse konfiguriert ist, um ein Tröpfchen (36) der kolloidalen Suspension auf einem Substrat (46) abzuscheiden; und
ein Trocknungsmittel (22), das angrenzend an den mindestens einen Druckkopf angeordnet ist **dadurch gekennzeichnet, dass** das Trocknungsmittel konfiguriert ist, um selektiv einen ersten Energieimpuls an ein abgeschiedenes Tröpfchen abzugeben, um die Flüssigkeit aus dem abgeschiedenen Tröpfchen zu verdampfen, wobei die Vorrichtung ferner aufweist:
ein Schmelzmittel (30), das angrenzend an das Trocknungsmittel angeordnet ist, wobei das Schmelzmittel konfiguriert ist, um selektiv einen zweiten Energieimpuls zum Schmelzen des Materials in einem Tröpfchen abzugeben, das durch das Trocknungsmittel getrocknet wurde.

2. Abscheidungsvorrichtung nach Anspruch 1, wobei das Trocknungsmittel eine Mehrzahl von einzeln steuerbaren Trocknungselementen aufweist, wobei jedes der Trocknungselemente auf jeweils eine der Düsen ausgerichtet ist; und
wobei das Schmelzmittel eine Mehrzahl von einzeln steuerbaren Schmelzelementen aufweist, wobei jedes der Schmelzelemente auf jeweils eine der Düsen ausgerichtet ist.

3. Abscheidungsvorrichtung nach Anspruch 1 oder Anspruch 2, wobei das Trocknungsmittel konfiguriert ist, um den ersten Energieimpuls als eine Mehrzahl von ersten Unterimpulsen abzugeben, und
das Schmelzmittel konfiguriert ist, um den zweiten Energieimpuls als eine Mehrzahl von zweiten Unterimpulsen abzugeben.

4. Abscheidungsvorrichtung nach einem der vorhergehenden Ansprüche, ferner aufweisend:
eine Mehrzahl von Behältern, wobei jeder Behälter (16) ein anderes Material in kolloidaler Suspension speichert; und
eine Mehrzahl von Druckköpfen, wobei jeder Druckkopf eine Mehrzahl von Düsen in Fluidverbindung mit jeweils einem der Mehrzahl von Behältern aufweist.

5. Abscheidungsvorrichtung nach einem der vorhergehenden Ansprüche, wobei die Düsen von jedem Druckkopf in zwei oder mehr Reihen angeordnet sind, wobei die Düsen in benachbarten Reihen zueinander versetzt sind.

6. Abscheidungsvorrichtung nach einem der vorhergehenden Ansprüche, wobei die Abscheidungsvorrichtung konfiguriert ist, um die Dauer der ersten und zweiten Energieimpulse so zu steuern, dass sie kleiner als die Zeit ist, die eine Druckwelle benötigt, um sich von der Mitte des Tröpfchens zum Rand des Tröpfchens zu bewegen.

7. Abscheidungsvorrichtung nach einem der vorhergehenden Ansprüche, wobei die Abscheidungsvorrichtung konfiguriert ist, um das zeitliche und Intensitätsprofil des zweiten Energieimpulses so zu steuern, dass er eine scharfe abfallende Flanke hat, sodass das Material und das darunterliegende Substrat abgeschreckt werden, nachdem sie durch den zweiten Energieimpuls geschmolzen wurden.

8. Abscheidungsvorrichtung nach einem der vorhergehenden Ansprüche, wobei der mindestens eine Druckkopf, das Trocknungsmittel und das Schmelzmittel Positionierungsmittel aufweisen, die konfiguriert sind, um jedes der Trocknungsmittel und der Schmelzmittel räumlich auf den mindestens einen Druckkopf auszurichten.

9. Abscheidungsvorrichtung nach einem der vorhergehenden Ansprüche, ferner aufweisend ein Schmelzsteuermittel, das konfiguriert ist, um das zeitliche und Intensitätsprofil des zweiten Energieimpulses auf Grundlage der thermischen Eigenschaften des Materials und des darunterliegenden Substrats so zu steuern, dass das Substrat bis zu einer vorbestimmten Tiefe schmilzt, während das Material indem einen der abgeschiedenen Tröpfchen geschmolzen wird, und/oder
wobei die Abscheidungsvorrichtung ferner ein Trocknungsmittel aufweist, das konfiguriert ist, um das zeitliche und Intensitätsprofil des ersten Energieimpulses so zu steuern, dass der erste Energieimpuls die Flüssigkeit in den Tröpfchen auf eine Temperatur unter dem Siedepunkt der Flüssigkeit erwärmt, und bevorzugt
wobei das Trocknungsmittel konfiguriert ist, um das zeitliche und Intensitätsprofil des ersten Energieimpulses so zu steuern, dass der erste Energieimpuls veranlasst, dass eine Blitzverdampfung der Flüssigkeit eintritt.

10. Abscheidungsvorrichtung nach einem der vorhergehenden Ansprüche, wobei das Trocknungsmittel erste und zweite Trocknungseinheiten aufweist, die an gegenüberliegenden Seiten des mindestens einen Druckkopfs angeordnet sind, und wobei das Schmelzmittel erste und zweite Schmelzeinheiten aufweist, die an gegenüberliegenden Seiten der ersten und zweiten Trocknungseinheiten angeordnet sind.

11. Additives Fertigungsverfahren, aufweisend:
ein Steuern (304) eines Druckkopfs, der eine Mehrzahl von Düsen aufweist, um eine Mehrzahl von Tröpfchen einer kolloidalen Suspension aus Material und Trägerflüssigkeit auf ein Substrat abzuscheiden;
**dadurch gekennzeichnet, dass das Verfahren ferner aufweist:**
ein Steuern (306) einer Mehrzahl von einzeln steuerbaren Trocknungselementen, um selektiv einen ersten Energieimpuls an ein abgeschiedenes Tröpfchen abzugeben, um die Flüssigkeit aus dem abgeschiedenen Tröpfchen zu verdampfen; und
ein Steuern (308) einer Mehrzahl von einzeln steuerbaren Schmelzelementen, um selektiv einen zweiten Energieimpuls zum Schmelzen des Materials in einem Tröpfchen abzugeben, das durch das Trocknungsmittel getrocknet wurde.

12. Additives Fertigungsverfahren nach Anspruch 11, ferner aufweisend: ein Steuern der Mehrzahl von Schmelzelementen, um selektiv einen Teil des Substrats unter einem der abgeschiedenen Tröpfchen zu schmelzen, wenn das Material in dem einen der abgeschiedenen Tröpfchen geschmolzen wird, um das Material in dem, Tröpfchen mit dem Substrat zu verschmelzen.

13. Verfahren nach Anspruch 11 oder 12, aufweisend:
ein Abscheiden einer Mehrzahl von ersten Tröpfchen mit einer kolloidalen Suspension eines ersten Materials;
ein Steuern der Trocknungselemente, um das in den ersten Tröpfchen abgeschiedene Material zu trocknen;
ein Abscheiden einer Mehrzahl von zweiten Tröpfchen neben dem in den ersten Tröpfchen abgeschiedenen Material, wobei die Mehrzahl von zweiten Tröpfchen eine kolloidale Suspension eines zweiten Materials enthält, das von dem ersten Material verschieden ist;
ein Steuern der Trocknungselemente, um das in den zweiten Tröpfchen abgeschiedene Material zu trocknen; und
ein Steuern der Schmelzelemente, um die abgeschiedenen ersten und zweiten Materialien zusammen zu schmelzen.

14. Verfahren nach Anspruch 11, aufweisend; ein Abscheiden einer Mehrzahl von ersten Tröpfchen;
ein Steuern der Trocknungselemente, um das in den ersten Tröpfchen abgeschiedene Material zu trocknen;
ein Abscheiden einer Mehrzahl von zweiten Tröpfchen auf das Material, das in den ersten Tröpfchen abgeschieden wurde;
ein Steuern der Trocknungselemente und Schmelzelemente, um das in den zweiten Tröpfchen abgeschiedene Material zu trocken und zu schmelzen, ohne das in den ersten Tröpfchen abgeschiedene Material zu schmelzen; und
ein Entfernen des in den ersten Tröpfchen abgeschiedenen Materials, um unter dem in den zweiten Tröpfchen abgeschiedenen Material einen Leerraum zu lassen.

15. Durch einen Computer lesbares Speichermedium, das angeordnet ist, um Computerprogrammanweisungen zu speichern, die, wenn sie ausgeführt werden, das Verfahren nach einem der Ansprüche 11 bis 14 ausführen.

## Revendications

1. Appareil de dépôt (100) à utiliser dans la fabrication additive, l'appareil de dépôt comprenant :
au moins un réservoir (16) destiné à stocker une suspension colloïdale de matériau et un véhicule liquide ;
au moins une tête d'impression (10) comprenant une pluralité de buses (12) en communication fluide avec le réservoir, chaque buse configurée pour déposer une gouttelette (36) de la suspension colloïdale sur un substrat (46) ; et
un moyen de séchage (22) disposé adjacent à l'au moins une tête d'impression, **caractérisé en ce que** le moyen de séchage est configuré pour fournir de manière sélective une première impulsion d'énergie à une gouttelette déposée dans le but d'évaporer le liquide de la gouttelette déposée, l'appareil comprenant en outre :
un moyen de fusion (30) disposé adjacent au moyen de séchage, le moyen de fusion configuré pour fournir de manière sélective une deuxième impulsion d'énergie pour faire fondre le matériau dans une gouttelette séchée par le moyen de séchage.

2. Appareil de dépôt selon la revendication 1, dans lequel le moyen de séchage comprend une pluralité d'éléments de séchage commandables individuellement, chacun des éléments de séchage étant aligné avec l'une respective des buses ; et
dans lequel le moyen de fusion comprend une pluralité d'éléments de fusion commandables individuellement, chacun des éléments de fusion étant aligné avec l'une respective des buses.

3. Appareil de dépôt selon la revendication 1 ou 2, dans lequel le moyen de séchage est configuré pour fournir la première impulsion d'énergie sous la forme d'une pluralité de premières sous-impulsions, et
le moyen de fusion est configuré pour fournir la deuxième impulsion d'énergie sous la forme d'une pluralité de deuxièmes sous-impulsions.

4. Appareil de dépôt selon l'une quelconque des revendications précédentes, comprenant en outre :
une pluralité de réservoirs, chaque réservoir (16) stockant un matériau différent en suspension colloïdale ; et
une pluralité de têtes d'impression, chaque tête d'impression comprenant une pluralité de buses en communication fluide avec l'un respectif de la pluralité de réservoirs.

5. Appareil de dépôt selon l'une quelconque des revendications précédentes, dans lequel les buses de chaque tête d'impression sont agencées en deux rangées ou plus, dans lequel les buses dans des rangées adjacentes sont décalées les unes des autres.

6. Appareil de dépôt selon l'une quelconque des revendications précédentes, dans lequel l'appareil de dépôt est configuré pour commander la durée des première et deuxième impulsions d'énergie pour être inférieure au temps mis par une onde de pression pour se déplacer depuis le centre de la gouttelette jusqu'au bord de la gouttelette.

7. Appareil de dépôt selon l'une quelconque des revendications précédentes, dans lequel l'appareil de dépôt est configuré pour commander le profil temporal et d'intensité de la deuxième impulsion d'énergie pour avoir un bord de fuite aigu de manière à ce que le matériau et le substrat sous-jacent soient refroidis après avoir été fondus par la deuxième impulsion d'énergie.

8. Appareil de dépôt selon l'une quelconque des revendications précédentes, dans lequel l'au moins une tête d'impression, le moyen de séchage et le moyen de fusion comprennent un moyen de positionnement configuré pour aligner spatialement chacun du moyen de séchage et du moyen de fusion avec l'au moins une tête d'impression.

9. Appareil de dépôt selon l'une quelconque des revendications précédentes, comprenant en outre un moyen de commande de fusion configuré pour commander le profil temporal et d'intensité de la deuxième impulsion d'énergie sur la base des propriétés thermiques du matériau et du substrat sous-jacent de façon à faire fondre le substrat jusqu'à une profondeur prédéterminée tout en faisant fondre le matériau dans ladite une des gouttelettes déposées, et/ou
dans lequel l'appareil de dépôt comprend en outre un moyen de commande de séchage configuré pour commander le profil temporal et d'intensité de la première impulsion d'énergie de manière à ce que la première impulsion d'énergie chauffe le liquide à l'intérieur des gouttelettes jusqu'à une température inférieure au point d'ébullition du liquide, et de préférence
dans lequel le moyen de commande de séchage est configuré pour commander le profil temporal et d'intensité de la première impulsion d'énergie de manière à ce que la première impulsion d'énergie entraîne la production d'une évaporation éclair du liquide.

10. Appareil de dépôt selon l'une quelconque des revendications précédentes, dans lequel le moyen de séchage comprend des première et deuxième unités de séchage disposées sur des côtés opposés de l'au moins une tête d'impression, et dans lequel le moyen de fusion comprend des première et deuxième unités de fusion disposées sur des côtés opposés des première et deuxième unités de séchage.

11. Procédé de fabrication additive comprenant :
la commande (304) d'une tête d'impression comprenant une pluralité de buses pour déposer une pluralité de gouttelettes d'une suspension colloïdale de matériau et un véhicule liquide sur un substrat ;
**caractérisé en ce que le procédé comprend en outre :**
la commande (306) d'une pluralité d'éléments de séchage commandables individuellement pour fournir de manière sélective une première impulsion d'énergie à une gouttelette déposée dans le but d'évaporer le liquide de la gouttelette déposée ; et
la commande (308) d'une pluralité d'éléments de fusion commandables individuellement pour fournir de manière sélective une deuxième impulsion d'énergie pour faire fondre le matériau dans une gouttelette séchée par le moyen de séchage.

12. Procédé de fabrication additive selon la revendication 11, comprenant en outre: la commande de la pluralité d'éléments de fusion pour faire fondre de manière sélective une partie du substrat sous l'une des gouttelettes déposées lors de la fusion du matériau dans ladite une des gouttelettes déposées, pour fusionner le matériau dans ladite gouttelette au substrat.

13. Procédé selon la revendication 11 ou 12, comprenant :
le dépôt d'une pluralité de premières gouttelettes incluant une suspension colloïdale d'un premier matériau ;
la commande des éléments de séchage pour sécher le matériau déposé dans les premières gouttelettes ;
le dépôt d'une pluralité de deuxièmes gouttelettes adjacentes au matériau déposé dans les premières gouttelettes, la pluralité de deuxièmes gouttelettes incluant une suspension colloïdale d'un deuxième matériau différent du premier matériau ;
la commande des éléments de séchage pour sécher le matériau déposé dans les deuxièmes gouttelettes ; et
la commande des éléments de fusion pour faire fondre conjointement les premier et deuxième matériaux déposés.

14. Procédé selon la revendication 11, comprenant: le dépôt d'une pluralité de premières gouttelette ;
la commande des éléments de séchage pour sécher le matériau déposé dans les premières gouttelettes ;
le dépôt d'une pluralité de deuxièmes gouttelettes au-dessus du matériau déposé dans les premières gouttelettes ;
la commande des éléments de séchage et des éléments de fusion pour sécher et faire fondre le matériau déposé dans les deuxièmes gouttelettes, sans faire fondre le matériau déposé dans les premières gouttelettes ; et
le retrait du matériau déposé dans les premières gouttelettes pour laisser un vide sous le matériau déposé dans les deuxièmes gouttelettes.

15. Support de stockage lisible par ordinateur conçu pour stocker des instructions de programme informatique qui, lorsqu'elles sont exécutées, mettent en oeuvre le procédé selon l'une quelconque des revendications 11 à 14.
